# EUROPEAN PATENT SPECIFICATION

(11) **EP 1 881 042 B1**
(45) Date of publication and mention of the grant of the patent: **24.06.2009**
(21) Application number: 06015146.1
(22) Date of filing: 20.07.2006
(51) Int. Cl.: C09D 11/02

(54) **Ink for specular print**
Tinte für reflektierenden Druck
Encre pour impression spéculaire

(43) Date of publication of application: 23.01.2008
(73) Proprietor: TEIKOKU PRINTING INKS MFG. CO., LTD, Tokyo 108-0073 (JP)
(72) Inventor: Takada, Naoto Teikoku Printing Inks Mfg.Co.Ltd., Arakawa-ku Tokyo 116-0011 (JP)
(74) Representative: von Füner, Nicolai

(56) References cited:
- EP-A- 1 437 389
- JP-A- 10 158 561
- JP-A- 2003 246 956
- JP-A- 2005 002 168

## Description

### Field of the Invention

The present invention relates to inks used for printed matter with specular gloss, and printed matter using the inks.

### Background of the Invention

Inks for specular prints are publicly known that are prepared with aluminum foils as a pigment, binders, and solvents.

The prior invention of Japanese Patent No. 3151606 applied by the applicant of this invention proposes constitutions of an ink for specular print which includes foils with specific thickness and surface area, and a specular printed matter using the ink.

The above-mentioned prior invention (hereinafter, referred to as the "applicant's prior invention") can provide significantly high specular gloss by specifying the values of the thicknesses and areas of aluminum foils as well as, within a preferred viscosity range of 50 to 1000 cps (measured at 20°C with a BM-type rotational viscometer), prevent sagging in terms of keeping contours of printed regions, and also realize highly qualified specular prints.

The applicant's prior invention is, however, expected to enhance sagging preventability from the level of keeping contours as mentioned above to that of a further fine and high criteria such that keeps clearances of thin lines, more specifically, prevents sagging in terms of keeping a clearance of 0.1mm.

An ink disclosed in Japanese Patent No. 3556210 requires thicknesses and areas of aluminum foils of which values are the same as those of the applicant's prior invention and an ink viscosity of 100 to 2500 cps (measured at 30°C).

The viscosity range of this Patent described above can be converted to about 130 to 3300 cps at 20°C according to measurement carried out by the applicant of the invention; however, regarding the effects of such a viscosity range, this Patent comments only on ability to prevent generation of defects on printed matter such as jaggedness, blur, pinholes or transparency for securing printability, but does not mention prevention of sagging generation in terms of contours, or even about the relationship between sagging generation and prevention thereof in terms of keeping a clearance of 0.1mm.

Specular prints are currently often used for electronic appliances; the sagging prevention in terms of keeping a clearance of 0.1mm mentioned above is particularly required in the fields of cellular phones, home electric appliances and the like to obtain fine printing designs.

Until now, however, an ink for specular print and specular printedmatter using the same that realizes prevention of sagging in terms of keeping a clearance of 0.1mm have not yet proposed.

### Disclosure of the Invention

### Problems to be Solved by the Invention

The present invention intends to provide an ink for specular print and a printed matter using the ink, wherein the ink allows to prevent sagging in terms of keeping a clearance on a thin outline with a width of 0.1mm by selecting an adequate lower limit value of ink viscosities as well as to exhibit highly specular gloss, when needed.

### Means for Solving the Problem

The aspects of the invention to solve the above-mentioned problems are as follows.
(1) A printing ink including 100 parts by weight of an aluminum foil as a pigment, 3 to 200 parts by weight of a binder polymer, and 500 to 2500 parts by weight of a solvent, wherein the aluminum foil contains aluminum foils with thicknesses of 0.03 µm or less and foil surface areas of 1.5 µm² to 2000 µm² in an amount of 80% or more based on an accumulated foil surface area, and having a viscosity of 3500 to 5500 cps (measured at 20°C with a BM-type rotational viscometer) to prevent sagging generation for keeping a clearance on a thin outline with a width of 0.1mm.
(2) An ink for specular print according to (1) wherein the aluminum foils have thicknesses of 0.02 µm or less.
(3) The ink for specular print according to (1) or (2) wherein the solvent contains 3-methyl-3-methoxy-1-butanol in an amount of 20% by weight or more.
(4) The ink for specular print according to any one of (1) to (3) wherein the binder contains at least one resin selected from the group consisting of polyester resins, polyurethane resins, acrylic resins, vinyl chloride-vinyl acetate copolymers, cellulose derivative resins, polycarbonate resins, polyvinyl butyral resins, polyamide resins, and epoxy resins.
(5) The ink for specular print according to any one of (1) to (4), the ink being applied for screen printing, gravure printing, and flexographic printing.
(6) A specular printed matter printed on a surface of a transparent substrate with the ink for specular print according to any one of (1) to (5) and viewed as a front face opposite the printed face thereof.

### Effects of the Invention

According to the invention, produced are an ink for specular print and a printed matter applied with the ink; the ink being, under exhibiting specular gloss as much as or more than that of the applicant's prior invention, allowed to prevent sagging in terms of keeping a clearance on a thin outline with a width of 0.1mm by defining a further lower viscosity limit value as well as to exhibit enhanced specular gloss in its usage.

### Best Mode for Carrying Out the Invention

The invention requires a viscosity range of 3500 to 5500 cps (measured at 20°C with a BM-type rotational viscometer; viscosity values to be described hereinafter are measured by the same way so as to omit the description of viscosity measurement conditions.)

The requirement of the lower limit value of 3500 cps in the invention is required to keep a clearance on a thin outline with a width of 0.1mm.

The upper limit value of 5500 cps represents a limit value to print without causing printing unevenness for any kind of printing method such as gravure printing, screen printing, and flexographic printing; such a limit value is derived from experimental data obtained by the inventors under trial and error.

In the ink of the invention, as mentioned in the aspect (1), a binder polymer is used in amounts of 3 to 200 parts by weight, and preferably 3 to 150 parts by weight to 100 parts by weight of the aluminum foil. This is why, when a volume of the binder polymer is less than 3 parts by weight, printability of the ink is reduced and durability of an ink layer printed is significantly deteriorated; when a volume of the binder polymer is 200 parts by weight or more, specular gloss of a printed matter may be decreased.

Every polymer applicable as a binder for printing inks can be used for the binder polymer. For example, as mentioned in the aspect (4), included are polyester resins, polyurethane resins, polycarbonate resins, polyvinyl butyral resins, polyamide resins, and epoxy resins; at least one resin thereof can be applicable.

Solvents to be used are those dissolving the binder polymers mentioned above or diluting such dissolved solution; as general examples, selectable are esters, ethers, ketones, alcohols, polyhydric alcohol derivatives, and aromatic hydrocarbons.

Especially, 3-methyl-3-methoxy-1-butanol as mentioned above in the aspect (3) is usually often used as a mixture thereof containing an amount of 20% or more because it does not have any specific toxicities and hardly dissolves a printing surface of a printing substrate.

In the invention, as described in the aspect (1), the volume of the solvent is 500 to 2500 parts by weight to 100 parts by weight of the aluminum foil. This is why, when being less than 500 parts by weight, reduction of specular gloss of a printed matter is observed; and when being more than 2500 parts by weight, printability of the ink is deteriorated.

Although an upper limit of a relative volume of solvents in the applicant's prior invention is 3000 parts by weight, the inventors have altered the value of 3000 parts by weight, which is the upper limit value of the applicant' s prior invention, to 2500 parts by weight since the above-mentioned printability of the ink of this invention is slightly lowered in the range of 2500 to 3000 parts by weight.

It is required in the aspect (1) of the invention that the aluminum foil contains aluminum foils with thicknesses of 0.03 µm or less and the foil surface areas of 1.5 µm² to 2000 µm² in an amount of 80% or more based on an accumulated foil surface area; this requirement depends on the purpose for obtaining highly enhanced specular gloss.

The specular gloss can be further enhanced in accordance with a decrease in the preferred lower limit value of the thicknesses as being from 0.03 µm or less in the aspect (1) to 0.02 µm or less in the aspect (2).

With regard to the foil area range, when a volume of the aluminum foils having surface areas of 1.5 µm² or less becomes large, it is difficult to obtain highly specular gloss; on the other hand, when a volume of the aluminum foils having surface areas of 2000 µm² or more becomes large, it tends to generate printing streaks or unevennesses.

The aluminum foils include evaporated aluminum pigments or foils produced by evaporation methods.

In the ink of the invention, transparent or semi-transparent colored pigments or extender pigments, pearl pigments, and other metal powders are also allowed to be added to change a color tone of specular gloss of a printed matter. Also, when needed, leveling agents and defoaming agents normally used for typical inks are also permitted to add to the ink.

Examples and Comparative Examples of the invention are explained as follows.

Viscosity values represented as units of cps were determined at 20°C with a BM-type rotational viscometer as explained in the above-mentioned viscosity values.

### (Example 1)

An ink was produced by adding 100 parts by weight of an aluminum foil containing aluminum foils with a thickness of 0.03 µm and foil surface areas of 1.5 µm² to 2000 µm² in an amount of 80% or more, with binders including 100 parts by weight of a polyurethane resin and 30 parts by weight of a polyester resin, and solvents including 100 parts by weight of methyl ethyl ketone, 700 parts by weight of 3-methoxy-3-methyl-1-butanol, 50 parts by weight ethyl acetate, and 300 parts by weight of propyleneglycol monomethylether. The viscosity of the ink was 3900 cps.

The ink produced was printed on a back face of a transparent polyester film by a flexographic printing. With regard to the resultant printing, significantly high specular gloss was visually observed, and the printed image maintained very clear contours as well as clearances on the thin outline with a width of 0.1mm.

### (Example 2)

An ink was produced by adding 100 parts by weight of an aluminum foil containing aluminum foils with a thickness of 0.02 µm and foil surface areas of 1. 5 µm² to 2000 µm² in an amount of 80% or more, with binders including 120 parts by weight of a polyester resin and 60 parts by weight of a cellulose derivative resin, and solvents including 200 parts by weight of methyl ethyl ketone, 300 parts by weight of 3-methoxy-3-methyl-1-butanol, 200 parts by weight ethyl acetate, and 100 parts by weight of toluene. The viscosity of the ink was 3750 cps.

The ink produced was printed on a back face of a transparent polyester film by gravure printing. With regard to the resultant printing, significantly high specular gloss was visually observed, and the printed image maintained very clear contours as well as clearances on the thin outline with a width of 0.1mm.

### (Comparative Example 1)

An ink was produced by adding 100 parts by weight of an aluminum foil containing aluminum foils with a thickness of 0.03 µm and foil surface areas of 1.5 µm² to 2000 µm² in an amount of 80% or more, with binders including 100 parts by weight of a polyurethane resin and 50 parts by weight of a cellulose derivative resin, and solvents including 1400 parts by weight of 3-methoxy-3-methyl-l-butanol and 100 parts by weight of cyclohexanone. The viscosity of the ink was 2450 cps.

The ink produced was printed on a back face of a transparent polyester filmby screen printing. With regard to the resultant printing, although significantly high specular gloss was visually observed, it was impossible to keep the clearances on the thin outline with a width of 0.1mm because the clearances on the thin outline with a width of 0.1mm were blurred due to sagging.

### (Comparative Example 2)

According to the applicant's prior invention, an ink was produced by adding 100 parts by weight of an aluminum foil containing aluminum foils with a thickness of 0.1 µm and foil surface areas of 20 µm² to 2000 µm² in an amount of 75% or more, with binders including 30 parts by weight of a polyester resin and 15 parts by weight of a cellulose derivative resin, and solvents including 600 parts by weight of cyclohexanone and 500 parts by weight of propyleneglycol monomethylether. The viscosity of the ink was 700 cps.

The ink produced was printed on a back face of a transparent polyester filmby screen printing. With regard to the resultant printing, although significantly high specular gloss was visually observed, it was impossible to keep the clearances on the thin outline with a width of 0.1mm because the clearances on the thin outline with a width of 0.1mm were blurred due to sagging.

### (Comparative Example 3)

An ink was produced by adding 100 parts by weight of an evaporated aluminum pigment with thicknesses of 0.5 µm or less and foil surface areas of 20 µm² to 2000 µm² in an amount of 75% or more, with a binder of 47 parts by weight of a butyral resin, and solvents including 181 parts by weight of ethyleneglycol monobutylether, 869 parts by weight of propyleneglycol monomethylether, 42 parts by weight of diethyleneglycol monobutylether acetate, and 77 parts by weight of isophorone and 31 parts by weight of acetone which was mixed to produce the evaporated aluminum pigment. The viscosity of the ink was 300 cps.

The ink produced was printed on a back face of a transparent polyester filmby screen printing. With regard to the resultant printing, although significantly high specular gloss was visually observed, it was impossible to keep the clearances on the thin outline with a width of 0.1mm because the clearances on the thin outline with a width of 0.1mm were blurred due to sagging.

### (Comparative Example 4)

An ink was produced by adding 100 parts by weight of an aluminum foil containing aluminum foils with a thickness of 0.02 µm and foil surface areas of 1. 5 µm² to 2000 µm² in an amount of 50% or more with binders including 140 parts by weight of a polyurethane resin and 20 parts by weight of a polyester resin, and solvents including 100 parts by weight of methyl ethyl ketone, 800 parts by weight of 3-methoxy-3-methyl-1-butanol, 100 parts by weight of ethyl acetate and 100 parts by weight of propyleneglycol monomethylether. The viscosity of the ink was 3000 cps.

The ink produced was printed on a back face of a transparent polyester filmby screen printing. With regard to the resultant printing, although significantly high specular gloss was visually observed, it was impossible to completely keep the clearances on the thin outline with a width of 0.1mm because the clearances on the thin outline with a width of 0.1mm were partly blurred due to sagging.

### Industrial Applicability

The ink of the invention is mainly used for printing on a back face where an opposite face of the face printed is viewed as a front face, thereby being utilized to obtain a printed matter having highly specular gloss and fine printing images, especially having a specular gloss with fine printing designability for electronic appliances.

## Claims

1. A printing ink comprising 100 parts by weight of an aluminum foil as a pigment, 3 to 200 parts by weight of a binder polymer, and 500 to 2500 parts by weight of a solvent, wherein the aluminum foil contains aluminum foils with thicknesses of 0.03 µm or less and foil surface areas of 1.5 µm² to 2000 µm² in an amount of 80% or more based on an accumulated foil surface area, and having a viscosity of 3500 to 5500 cps (measured at 20°C with a BM-type rotational viscometer) to prevent sagging generation for keeping a clearance on a thin outline with a width of 0.1mm.

2. An ink for specular print according to Claim 1 wherein the aluminum foils have thicknesses of 0.02 µm or less.

3. The ink for specular print according to Claim 1 and 2 wherein the solvent contains 3-methyl-3-methoxy-1-butanol in an amount of 20% by weight or more.

4. The ink for specular print according to any one of Claims 1 to 3 wherein the binder contains at least one resin selected from the group consisting of polyester resins, polyurethane resins, acrylic resins, vinyl chloride-vinyl acetate copolymers, cellulose derivative resins, polycarbonate resins, polyvinyl butyral resins, polyamide resins, and epoxy resins.

5. The ink for specular print according to any one of Claims 1 to 4, the ink being applied for screen printing, gravure printing, and flexographic printing.

6. A specular printed matter printed on a surface of a transparent substrate with the ink for specular print according to any one of Claims 1 to 5 and viewed as a front face opposite the printed face thereof.

## Patentansprüche

1. Druckfarbe, umfassend 100 Gewichtsteile einer Aluminiumfolie als Pigment, 3 bis 200 Gewichtsteile eines Binderpolymers und 500 bis 2500 Gewichtsteile eines Lösungsmittels, wobei die Aluminiumfolie Aluminiumfolien mit Stärken von 0,03 µm oder weniger und Folienoberflächen von 1,5 bis 2000 µm² in einer Menge von 80 % oder mehr, bezogen auf die Gesamtfolienoberfläche, mit einer Viskosität von 3500 bis 5500 cPs, gemessen bei 20° C mit Hilfe eines Rotationsviskosimeters vom BM-Typ, zur Verhinderung des Durchbiegens für die Aufrechterhaltung eines Abstandes auf einer dünnen Kontur mit einer Breite von 0,1 mm.

2. Druckfarbe für Spiegeldruck nach Anspruch 1, wobei die Aluminiumfolien Stärken von 0,02 µm oder weniger aufweisen.

3. Druckfarbe für Spiegeldruck nach Anspruch 1 und 2, wobei das Lösungsmittel 3-Methyl-3-methoxy-1-butanol in einer Menge von 20 Gew.-% oder mehr enthält.

4. Druckfarbe für Spiegeldruck nach einem der Ansprüche 1 bis 3, wobei der Binder wenigstens ein Harz, ausgewählt aus der Gruppe, bestehend aus Polyester-, Polyurethan-, Acrylharzen, Vinylchlorid-Vinylacetat-Copolymeren, Cellulosederivatharzen, Polycarbonat-, Polyvinylbutyral-, Polyamid- und Epoxyharzen, enthält.

5. Druckfarbe für Spiegeldruck nach einem der Ansprüche 1 bis 4, die für Zwecke des Sieb-, Tief- und Flexodrucks aufgebracht wird.

6. Durch Spiegeldruck bedruckter Stoff, der auf der Oberfläche eines transparenten Substrats mit der Druckfarbe für Spiegeldruck nach einem der Ansprüche 1 bis 5 bedruckt ist und als die der bedruckten Seite gegenüberliegende Seite betrachtet wird.

## Revendications

1. Encre d'impression comprenant 100 parties en poids d'une feuille d'aluminium en tant que pigment, 3 à 200 parties en poids d'un polymère liant et 500 à 2 500 parties en poids d'un solvant, dans laquelle la feuille d'aluminium contient des feuilles d'aluminium dont les épaisseurs sont inférieures ou égales à 0,03 µm et dont les aires de surface de feuille sont comprises entre 1,5 µm² et 2 000 µm², en quantité équivalente à 80 % ou plus, sur la base d'une aire de surface de feuille accumulée, et dont la viscosité est comprise entre 3 500 et 5 500 cps (mesurée à 20°C avec un viscosimètre rotatif de type BM) pour empêcher la formation d'un affaissement afin de conserver un espace sur un contour mince de largeur égale à 0,1 mm.

2. Encre pour impression spéculaire selon la revendication 1, dans laquelle les feuilles d'aluminium ont des épaisseurs inférieures ou égales à 0,02 µm.

3. Encre pour impression spéculaire selon les revendications 1 et 2, dans laquelle le solvant contient une quantité de 20 % en poids ou plus de 3-méthyl-3-méthoxy-1-butanol.

4. Encre pour impression spéculaire selon l'une des revendications 1 à 3, dans laquelle le liant contient au moins une résine choisie dans le groupe constitué de résines de polyester, des résines de polyuréthane, des résines acryliques, des copolymères chlorure de vinyle-acétate de vinyle, des résines dérivées de cellulose, des résines de polycarbonate, des résines de butyral de polyvinyle, des résines de polyamide et des résines époxy.

5. Encre pour impression spéculaire selon l'une des revendications 1 à 4, l'encre étant appliquée à la sérigraphie, à l'impression en creux et à la flexographie.

6. Motif imprimé, par impression spéculaire, sur une surface d'un substrat transparent avec l'encre pour impression spéculaire selon l'une des revendications 1 à 5, vu comme une face avant opposée à la face imprimée du substrat.
